# EUROPEAN PATENT SPECIFICATION

(11) **EP 1 224 868 B1**
(45) Date of publication and mention of the grant of the patent: **26.01.2005**
(21) Application number: 00969929.9
(22) Date of filing: 20.10.2000
(51) Int. Cl.: A23C 9/156, A23C 9/133, A23L 2/02, A23L 2/68, A23L 1/307, A23L 1/308, A23L 1/0524, A23C 9/154, A23C 9/13

(54) **Low-calorie milk-containing acidic beverage**
Kalorienarmes Sauertrink enthaltend Milch
Boisson acide basses calories contenant du lait

(30) Priority: 27.10.1999 JP 30543299; 20.06.2000 JP 2000184748
(43) Date of publication of application: 24.07.2002
(73) Proprietor: Calpis Co., Ltd., Shibuya-ku, Tokyo 150-0022 (JP)
(72) Inventor: SATO, Kazuyoshi, Calpis Co., Ltd., Sagamihara-shi, Kanagawa 229-0006 (JP); SOMOTO, Akishige, Calpis Co., Ltd., Sagamihara-shi, Kanagawa 229-0006 (JP)
(74) Representative: Hallybone, Huw George
(86) International application number: PCT/JP2000/007310
(87) International publication number: WO 2001/030169

(56) References cited:
- EP-A- 0 565 260
- EP-A- 0 937 407
- EP-A- 0 958 746
- EP-A1- 0 521 707
- JP-A- 8 056 567
- JP-A- 11 262 379
- US-A- 4 971 810
- US-A- 5 710 270
- PATENT ABSTRACTS OF JAPAN vol. 018, no. 334 (C-1216), 24 June 1994 (1994-06-24) & JP 06 078668 A (FUJI OIL CO LTD;OTHERS: 01), 22 March 1994 (1994-03-22)
- MADAR Z., THORNE R.: "Dietary fiber" PROGRESS IN FOOD AND NUTRITION SCIENCE, vol. 11, no. 2, 1987, pages 153-174, XP009001182 Pergamon Press, US ISSN: 0306-0632
- GLAHN P E ET AL: "CASEIN-PECTIN INTERACTION IN SOUR MILK BEVERAGES" SYMPOSIUM ON FOOD INGREDIENTS EUROPE, XX, XX, 4 October 1994 (1994-10-04), pages 252-256, XP000604284

## Description

The present invention relates to a low-calorie milk-containing acidic beverage that is excellent in taste and flavor and has good storage stability, wherein aggregation and sedimentation of suspended milk protein particles are substantially prevented over long time storage.

Milk-containing acidic beverages have been creating a large market in the recent soft drink industry for their refreshing taste and flavor, supported by natural- and health-conscious consumers. Recently demanded by the market are low-calorie beverages with limited sugar content, and milk-containing acidic beverages containing not only the milk component but also additional components that contribute to maintenance of one's health, such as fruit juice or vegetable juice.

However, sugars inhibit aggregation and sedimentation of suspended milk protein particles, so that restriction of sugar content will cause difficulties in producing milk-containing acidic beverages having excellent storage stability wherein aggregation and sedimentation of suspended milk protein particles are inhibited. Further, addition of fruit or vegetable juice to milk-containing acidic beverages will further promote aggregation and sedimentation of the suspended particles, since milk protein is unstable under the acidic conditions, and polyphenols and the like contained in the fruit and vegetable juices tend to react with milk protein.

In order to solve these problems, various solutions have hitherto been proposed, including a method for adding fruit juice with a high pectin content (Japanese Patent No. 1238699), and a method of simultaneous addition and combined use of pectin and soybean dietary fibers (Japanese Patent No. 2834345).

On the other hand, various methods have hitherto been proposed for stabilizing acidic beverages containing milk protein but not essentially containing fruit or vegetable juice, and various beverage products have been commercially available. For example, soybean dietary fibers, which are less liable to cause increase in viscosity than pectin and thus capable of affording smooth beverages, have recently been proposed to be added to milk-based acidic beverages as in a calcium-containing milk-based acidic beverage (JP-10-4876-A) and in a method for producing a milk-based acidic beverage (JP-11-225889-A).

When a low-calorie milk-based acidic beverage of 20 kcal/100ml or less with a low sugar content is produced in accordance with the conventionally proposed methods for stabilizing a milk-containing acidic beverage, the average particle size of the suspended milk protein particles in the resulting beverage falls in the range of 0.5 µm to 2 µm. As a result, sufficient storage stability may not always be retained for preventing aggregation and sedimentation in the beverage, when such low-calorie milk-based acidic beverage manufactured by a conventional method is placed in various environment during distribution.

It is therefore an object of the present invention to provide a low-calorie milk-containing acidic beverage having good taste and flavor, and exhibiting excellent storage stability over the shelf life, wherein particle sizes of at least 90 % of suspended particles contained in the beverage are less than 0.5 µm.

Through intensive studies for realizing the above object, the present inventors have found out that control of the adding order of soybean dietary fibers and pectin and other factors during production of low-calorie milk-containing acidic beverages, results in a novel milk-containing acidic beverage with excellent storage stability, wherein the particle sizes of at least 90 % of suspended particles contained in the beverage are less than 0.5 µm. Such beverage has never been realized, and thus the present invention has been completed.

According to the present invention, there is provided a low-calorie milk-containing acidic beverage comprising milk, soybean dietary fibers, and pectin, wherein said beverage has a pH of 3.0 to 4.0 and is not higher than 20 kcal/100 ml, and wherein particle sizes of at least 90 % of suspended particles contained in said beverage are less than 0.5 µm.

The low-calorie milk-containing acidic beverage according to the present invention contains, as essential components, milk, soybean dietary fibers, and pectin, and this beverage is not higher than 20 kcal/100 ml. When the beverage is to be indicated as being no-calorie, the calories of the beverage should be less than 5 kcal/100 ml according to the Japanese Nutritional Improvement Law currently valid.

A low-calorie milk-containing acidic beverage of not higher than 20 kcal/100ml usually has a pH of about 3.0 to about 4.0, which usually causes undesirable aggregation and sedimentation of milk protein. However, in the low-calorie milk-containing acidic beverage of the present invention, the particle sizes of at least 90 % of the suspended milk protein particles contained in the beverage are less than 0.5 µm as measured, for example, after the accelerated preservation test wherein the beverage is stored at 55°C for 5 days. Thus, the aggregation and sedimentation of the suspended milk protein particles in the present beverage may be inhibited over the shelf life.

The particle sizes of the suspended milk protein particles may be measured, for example, with a publicly known particle size analyzer.

The milk contained as one of the essential components in the beverage of the present invention is usually cow's milk, but either animal or vegetable milk may be used. Examples of such milk may include animal milks such as goat's milk, sheep's milk, and horse's milk; and vegetable milks such as soybean milk. One or more of these milks may be contained in the present beverage.

The form of the milk as a starting material is not particularly limited, and whole fat milk, skim milk, or whey may be used. Milks reconstituted from powdered milk or concentrated milk may also be used as well.

In the milk-containing acidic beverage of the present invention, the content of the milk protein is preferably 0.1 to 5.0 wt%, more preferably 0.1 to 3.0 wt%, most preferably 0.5 to 2.0 wt%, of the total weight of the beverage. If the content of the milk protein is less than 0.1 wt%, taste and flavor characteristic of milk may not be obtained. If the content exceeds 5.0 wt%, the viscosity of the beverage is increased, the refreshing taste and flavor are deteriorated, and inhibition of aggregation and sedimentation of the milk protein becomes difficult, thus being not preferred.

The soybean dietary fibers contained as one of the essential components in the beverage of the present invention is composed of polysaccharides extracted and purified from bean curd refuse (okara), which is a by-product of the manufacturing process of soybean products, and contains galacturonic acid, of which carboxyl group causes the fibers to be charged negatively under acidic conditions. Preferable constituent saccharides may include galactose, arabinose, galacturonic acid, rhamnose, xylose, fucose, and glucose. It is preferred that the soybean dietary fibers contain about 20 wt% galacturonic acid. Preferred examples of soybean dietary fiber products may include "SM-910", "SM-900", and "SM-700" (all of trade names) manufactured by San-Ei Gen F.F.I., Inc.

In the present invention, the content of the soybean dietary fibers is usually 0.05 to 1.0 wt%, preferably 0.1 to 0.7 wt%, of the total weight of the beverage. If the content is less than 0.05 wt%, stabilizing effect of the soybean dietary fibers upon the suspended milk protein particles may not be obtained. If the content exceeds 1.0 wt%, taste and flavor of the beverage may be deteriorated by the soybean dietary fibers, and the refreshingness of the beverage may be lost.

According to the present invention, the pectin contained as one of the essential components in the beverage of the present invention may be, for example, either a low-methoxyl pectin or a high-methoxyl pectin (including a high-methoxyl pectin of Blockwise type), with the latter being more preferable.

As a high-methoxyl pectin, those having the methoxyl group content of 65 to 75 mol% are preferred.

In the present invention, the content of the pectin is usually 0.05 to 1.0 wt%, preferably 0.1 to 0.7 wt%, of the total weight of the beverage. If the pectin content is less than 0.05 wt%, the stabilizing effect of the pectin upon the suspended milk protein particles may be too little. If the pectin content exceeds 1.0 wt%, the viscosity of the beverage is too high, rendering the beverage pasty, and the refreshingness of the beverage may be lost.

According to the present invention, the beverage may optionally contain fruit and/or vegetable juice as desired. Examples of the fruit juice may include various juices such as grape, apple, pear, peach, melon, strawberry, blueberry, citrus, and pineapple juices; extracts of these; and mixtures thereof. The extracts may be those commercially available.

Examples of the vegetable juice may include various juices such as tomato, carrot, celery, lettuce, cabbage, pumpkin, Jew's marrow (Moroheiya), parsley, and perilla juices; extracts of these; and mixtures thereof. The extracts may be those commercially available.

One or more of these fruit and vegetable juices may be contained in the present beverage.

In the present invention, the content of the fruit and/or vegetable juice is not particularly limited, and may be selected suitably depending on preference and health-consciousness. Usually, the content of the fruit and/or vegetable juice may be 1 to 50 wt%, preferably 5 to 40 wt%, of the total weight of the beverage.

According to the present invention, the pH of the beverage may be adjusted with an acidifier such as an organic acid contained in the fruit and/or vegetable juice mentioned above. When desired, additional acidifier such as an organic or inorganic acid may be contained in the beverage for pH adjustment, in addition to the fruit and/or vegetable juice. Such acidifier may be the same as those contained in the fruit or vegetable juice.

Examples of such acidifier may include organic acids generated by fermentation with microorganisms such as lactic acid bacteria, organic acids contained in fruit and/or vegetable juice, inorganic acids, and mixtures thereof.

Examples of the organic acids may include lactic acid, citric acid, malic acid, tartaric acid, gluconic acid, succinic acid, and fumaric acid. Examples of the inorganic acids may include phosphoric acid.

In the present invention, the total content of the acidifier including those contained in the fruit and vegetable juices, may be decided suitably so that the pH of the beverage falls within the above-mentioned range.

According to the present invention, the beverage may also contain a saccharide and/or a sweetener as desired.

Examples of the saccharide may include saccharose, glucose, fructose, galactose, lactose, maltose, and various oligosaccharides, all of which are used for general food processing.

Examples of the sweetener may include low-calorie sweeteners such as aspartame, stevia, sucralose, and glycyrrhizin.

One or more of these saccharides and sweeteners may be contained in the beverage.

In the present invention, the content of the saccharide and/or sweetener is not particularly limited, and may be selected suitably depending on preference and other factors. However, in order to indicate that the beverage is low-calorie according to the Japanese Nutritional Improvement Law, the content of these components should be such that the calorie of the beverage does not exceed 20 kcal/100 ml.

The low-calorie milk-containing acidic beverage of the present invention may optionally contain other components as desired, as long as the object of the present invention is achieved. Examples of such other components may include water, a flavoring agent, and a pigment.

The low-calorie milk-containing acidic beverage of the present invention may be produced, for example, by the method to be discussed later, which is not restrictive. It should be noted, however, that depending on the manufacturing process, even the identical components may not always afford the beverage of the present invention, which has a pH of 3.0 to 4.0 and is not higher than 20 kcal/100 ml, and wherein particle sizes of at least 90 % of suspended particles contained in the beverage are less than 0.5 µm.

For producing the low-calorie milk-containing acidic beverage of the present invention, for example, milk and soybean dietary fibers among the essential components are first mixed homogeneously to obtain a mixture, to which mixture an acidifier is added to adjust the pH to 3.0 to 4.0, thereby obtaining a primary mixture. Then, at least pectin as the rest of the essential components, and optionally other components such as fruit and/or vegetable juice, a saccharide and/or a sweetener, and water, are added to the primary mixture to obtain a secondary mixture. It is preferred that the components are mixed so that the pH of the secondary mixture also falls in the range of 3.0 to 4.0. Incidentally, the acidifier added during the preparation of the primary mixture may be fruit and/or vegetable juice.

It is essential to have the secondary mixture undergo a homogenizing treatment for achieving prolonged storage stability of the resulting product. Such homogenizing treatment may preferably be carried out, for example, under the pressure of about 10 MPa to about 50 MPa. The fruit and/or vegetable juice, a saccharide and/or a sweetener, and other additional components may be added upon preparing the primary mixture, after the homogeni zing treatment, or in portions. The apparatus to be used for the homogenizing treatment is not particularly limited, and, for example, a homogenizer commonly used in food processing may preferably be used. When a saccharide is added, the amount thereof should be controlled properly in order to suppress the calories.

The low-calorie milk-containing acidic beverage of the present invention cannot be obtained when, for example, pectin is added before the pH adjustment in preparing the primary mixture.

The low-calorie milk-containing acidic beverage of the present invention prepared in accordance with the method mentioned above is preferably subjected to a pasteurization treatment, when the beverage is intended for distribution at an ordinary temperature. The pasteurization treatment may preferably be carried out by heating the beverage up to a predetermined temperature of not lower than 80 °C, and keeping the temperature for 0 to 60 minutes, as commonly carried out on acidic processed foods. Alternatively, the beverage may be distributed in a chilled state without the pasteurization treatment.

The present invention will now be explained in detail with reference to Examples, which are illustrative only and should not be construed in a limiting sense.

The soybean dietary fibers and pectin used in the following Examples and Comparative Examples were SM910 (trade name) manufactured by San-Ei Gen F.F.I., Inc. and YM-115-LJ (trade name) manufactured by Hercules Japan, Inc., respectively. The homogenizing treatment was carried out in a laboratory homogenizer (model 15MR manufactured by APV GAULIN INC. operating at 1-5 MPa).

### Example 1

1.6 kg of powdered skim milk was dissolved in 6.4 kg of water, and 6.0 kg of a 3 wt% aqueous solution of soybean dietary fibers and 3.3 kg of high fructose syrup were added and stirred into a homogenous mixture, followed by pH adjustment to 3.7 with 2.2 kg of a 10 wt% citric anhydride solution. After thorough stirring, 4.7 kg of a 3 wt% aqueous solution of pectin and 2.5 kg of a 1 wt% aspartame solution were added, and then the total amount of the mixture was increased to 95 kg with ion exchanged water, followed by pH adjustment to 3.8 with 0.1 kg of a 10 wt% sodium citrate solution. A yogurt flavoring agent was added, and then the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a milk-containing acidic beverage product.

The beverage product thus produced contained 0.54 wt% milk protein, 0.18 wt% soybean dietary fibers, and 0.14 wt% pectin, had a pH of 3.8, and was 16 kcal/100 ml.

This beverage product was left still at an ordinary temperature for two months, and then subjected to measurements of the particle -size distribution of suspended particles with a particle size analyzer (Model LA-920, manufactured by HORIBA, LTD.). The results of the measurements of the maximum particle size of 50, 80, and 90 cumulative percent of the suspended particles, respectively, after the two months are shown in Table 1. Further, by visual observation, it was confirmed that the product after the two months had not been changed in appearance since immediately after the production, and that the product was in good condition without any whey off.

### Example 2

1.6 kg of powdered skim milk was dissolved in 6.4 kg of water, and 6.0 kg of a 3 wt% aqueous solution of soybean dietary fibers was added and stirred into a homogeneous mixture, followed by pH adjustment to 3.7 with 2.2 kg of a 10 wt% citric anhydride solution. After thorough stirring, 4.7 kg of a 3 wt% aqueous solution of pectin, 3.3 kg of high fructose syrup, and 2.5 kg of a 1 wt% aspartame solution were added, and then the total amount of the mixture was increased to 95 kg with ion exchanged water, followed by pH adjustment to 3.8 with 0.1 kg of a 10 wt% sodium citrate solution. Then a yogurt flavoring agent was added, and the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a milk-containing acidic beverage product.

The beverage product thus produced contained 0.54 wt% milk protein, 0.18 wt% soybean dietary fibers, and 0.14 wt% pectin, had a pH of 3.8, and was 16 kcal/100 ml.

This beverage product was subjected to the same measurements as in Example 1. The results are shown in Table 1. Further, by visual observation, it was confirmed that the product had not been changed in appearance since immediately after the production, and that the product was in good condition without any whey off.

### Example 3

1.6 kg of powdered skim milk was dissolved in 6.4 kg of water, and 6.0 kg of a 3 wt% aqueous solution of soybean dietary fibers was added and stirred into a homogeneous mixture. The total amount of the mixture was increased to 80 kg with ion exchanged water, and the pH was adjusted to 3.7 with 2.2 kg of a 10 wt% citric anhydride solution. Then 4.7 kg of a 3 wt% aqueous solution of pectin, 3.3 kg of high fructose syrup, and 2.5 kg of a 1 wt% aspartame solution were added, and the total amount of the mixture was increased to 95 kg with ion exchanged water, followed by pH adjustment to 3.8 with 0.1 kg of a 10 wt% sodium citrate solution. A yogurt flavoring agent was added, and the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a milk-containing acidic beverage product.

The beverage product thus produced contained 0.54 wt% milk protein, 0.18 wt% soybean dietary fibers, and 0.14 wt% pectin, had a pH of 3.8, and was 16 kcal/100 ml.

This beverage product was subjected to the same measurements as in Example 1. The results are shown in Table 1. Further, by visual observation, it was confirmed that the product had not been changed in appearance since immediately after the production, and that the product was in good condition without any whey off.

### Comparative Example 1

1.6 kg of powdered skim milk was dissolved in 6.4 kg of water, and 3.3 kg of high fructose syrup was added and stirred into a homogeneous mixture, followed by pH adjustment to 3.7 with 2.2 kg of a 10 wt% citric anhydride solution. After thorough stirring, 6.0 kg of a 3 wt% aqueous solution of soybean dietary fibers, 4.7 kg of a 3 wt% aqueous solution of pectin, and 2.5 kg of a 1 wt% aspartame solution were added, and the total amount of the mixture was increased to 95 kg with ion exchanged water, followed by pH adjustment to 3.8 with 0.1 kg of a 10 wt% sodium citrate solution. A yogurt flavoring agent was added, and the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a beverage product.

The beverage product thus produced contained 0.54 wt% milk protein, 0.18 wt% soybean dietary fibers, and 0.14 wt% pectin, had a pH of 3.8, and was 16 kcal/100 ml.

This beverage product was subjected to the same measurements as in Example 1. The results are shown in Table 1. Further, by visual observation, it was confirmed that the product after the test had remarkable aggregation and sedimentation, and transparent whey off.

### Comparative Example 2

1.6 kg of powdered skim milk was dissolved in 6.4 kg of water, and a mixture of 3.3 kg of high fructose syrup, 6.0 kg of a 3 wt% aqueous solution of soybean dietary fibers, and 4.7 kg of a 3 wt% aqueous solution of pectin was added and stirred into a homogeneous mixture, followed by pH adjustment to 3.7 with 2.2 kg of a 10 wt% citric anhydride solution. Then, 2.5 kg of a 1 wt% aspartame solution was added and stirred thoroughly, and the total amount of the mixture was increased to 100 kg with ion exchanged water, followed by pH adjustment to 3.8 with 0.1 kg of a 10 wt% sodium citrate solution. A yogurt flavoring agent was added, and the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a beverage product.

The beverage product thus produced contained 0.54 wt% milk protein, 0.18 wt% soybean dietary fibers, and 0.14 wt% pectin, had a pH of 3.8, and was 16 kcal/100 ml.

This beverage product was subjected to the same measurements as in Example 1. The results are shown in Table 1. Further, by visual observation, it was confirmed that the product after the test had remarkable aggregation and sedimentation, and transparent whey off.

### Comparative Example 3

1.6 kg of powdered skim milk was dissolved in 6.4 kg of water, and 4.7 kg of a 3 wt% aqueous solution of pectin and 3.3 kg of high fructose syrup were added, and stirred into a homogeneous mixture, followed by pH adjustment to 3.7 with 2.2 kg of a 10 wt% citric anhydride solution. After thorough stirring, 6.0 kg of a 3 wt% aqueous solution of soybean dietary fibers and 2.5 kg of a 1 wt% aspartame solution were added, and the total amount of the mixture was increased to 95 kg with ion exchanged water, followed by pH adjustment to 3.8 with 0.1 kg of a 10 wt% sodium citrate solution. Then a yogurt flavoring agent was added, and the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a milk-containing acidic beverage product.

The beverage product thus produced contained 0.54 wt% milk protein, 0.18 wt% soybean dietary fibers, and 0.14 wt% pectin, had a pH of 3.8, and was 16 kcal/100 ml.

This beverage product was subjected to the same measurements as in Example 1. The results are shown in Table 1. Further, by visual observation, it was confirmed that the product after the test had remarkable aggregation and sedimentation, and transparent whey off.

### Comparative Example 4

1.6 kg of powdered skim milk was dissolved in 6.4 kg of water, and 2.2 kg of a 10 wt% citric anhydride solution was added to adjust the pH to 3.7. After thorough stirring, 6.0 kg of a 3 wt% aqueous solution of soybean dietary fibers, 4.7 kg of a 3 wt% aqueous solution of pectin, 3.3 kg of high fructose syrup, and 2.5 kg of a 1 wt% aspartame solution were added. The total amount of the mixture was increased to 95 kg with ion exchanged water, and 0.1 kg of a 10 wt% sodium citrate solution was added to adjust the pH to 3.8. A yogurt flavoring agent was added, and the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a milk-containing acidic beverage product.

The beverage product thus produced contained 0.54 wt% milk protein, 0.18 wt% soybean dietary fibers, and 0.14 wt% pectin, had a pH of 3.8, and was 16 kcal/100 ml.

This beverage product was subjected to the same measurements as in Example 1. The results are shown in Table 1. Further, by visual observation, it was confirmed that the product after the test had remarkable aggregation and sedimentation, and transparent whey off.

**Table 1**

| | Max. particle size of 50 cumulative % of suspended particles (µm) | Max. particle size of 80 cumulative % of suspended particles (µm) | Max. particle size of 90 cumulative % of suspended particles (µm) |
|---|---|---|---|
| Example 1 | 0.238 | 0.326 | 0.391 |
| Example 2 | 0.246 | 0.331 | 0.388 |
| Example 3 | 0.233 | 0.320 | 0.386 |
| Comp. Ex. 1 | 0.435 | 0.625 | 0.794 |
| Comp. Ex. 2 | 0.700 | 7.267 | 10.129 |
| Comp. Ex. 3 | 2.585 | 4.943 | 6.337 |
| Comp. Ex. 4 | 5.812 | 8.722 | 10.735 |

### Example 4

1.4 kg of powdered skim milk was dissolved in 5.6 kg of water, and 6.7 kg of a 3 wt% aqueous solution of soybean dietary fibers was added and stirred into a homogeneous mixture, followed by pH adjustment to 3.7 with 2.3 kg of a 10 wt% citric acid solution. After thorough stirring, 6.7 kg of a 3 wt% aqueous solution of pectin was added, and then 2.7 kg of seven-fold concentrate of apple juice, 1.5 kg of 42 ° carrot juice (pulpy type), and 2 kg of a 1 wt% aspartame solution were added, followed by pH adjustment to 3.8 with 0.5 kg of a sodium citrate solution. Then a yogurt flavoring agent was added, and the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a milk-containing acidic beverage product.

The beverage product thus produced contained 0.48 wt% milk protein, 0.2 wt% soybean dietary fibers, and 0.2 wt% pectin, had a pH of 3.8, and was 19 kcal/100 ml, thus being a low-calorie milk-containing acidic beverage.

The particle size distribution of the suspended particles in this beverage product was measured with a particle size analyzer (model LA-920, manufactured by HORIBA LTD.) immediately after the production and after the accelerated preservation test (at 55 °C for 5 days). The results of the measurements of the maximum particle size of 50, 80, and 90 cumulative percent of the suspended particles, respectively, are shown in Table 2. Further, by visual observation, it was confirmed that the product after the accelerated preservation test had not been changed in appearance since immediately after the production, and that the product was in good condition.

### Example 5

1.4 kg of powdered skim milk was dissolved in 5.6 kg of water, and 6.7 kg of a 3 wt% aqueous solution of soybean dietary fibers was added and stirred into a homogeneous mixture, followed by pH adjustment to 3.7 with 2.3 kg of a 10 wt% citric acid solution. Then 2.7 kg of seven-fold concentrate of apple juice, 1.5 kg of 42° carrot juice (pulpy type) , and 2 kg of a 1 wt% aspartame solution were added, followed by pH adjustment to 3.8 with 0.5 kg of a sodium citrate solution. The total amount of the mixture was increased to 90 kg with ion exchanged water, and 6.7 kg of a 3 wt% aqueous solution of pectin and a yogurt flavoring agent were added, and then the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a beverage product.

The beverage product thus produced contained 0.48 wt% milk protein, 0.2 wt% soybean dietary fibers, and 0.2 wt% pectin, had a pH of 3.8, and was 19 kcal/100 ml, thus being a low-calorie milk-containing acidic beverage.

This beverage product was subjected to the same measurements as in Example 4. The results are shown in Table 2. Further, by visual observation, it was confirmed that the product after the accelerated preservation test had not been changed in appearance since immediately after the production, and that the product was in good condition.

### Comparative Example 5

1.4 kg of powdered skim milk was dissolved in 5.6 kg of water, and 6.7 kg of a 3 wt% aqueous solution of soybean dietary fibers and 6.7 kg of a 3 wt% aqueous solution of pectin were added simultaneously and stirred into a homogeneous mixture, followed by pH adjustment to 3.7 with 2.3 kg of a 10 wt% citric acid solution. After thorough stirring, 2.7 kg of seven-fold concentrate of apple juice, 1.5 kg of 42° carrot juice (pulpy type), and 2 kg of a 1 wt% aspartame solution were added, followed by pH adjustment to 3.8 with 0.5 kg of a sodium citrate solution. Then a yogurt flavoring agent was added, and the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a milk-containing acidic beverage product.

The beverage product thus produced contained 0.48 wt% milk protein, 0.2 wt% soybean dietary fibers, and 0.2 wt% pectin, had a pH of 3.8, and was 19 kcal/100 ml, thus being a low-calorie milk-containing acidic beverage.

This beverage product was subjected to the same measurements as in Example 4. The results are shown in Table 2. Further, by visual observation, it was confirmed that the product after the accelerated preservation test had sedimentation in the lower part, compared to the product immediately after the production.

### Comparative Example 6

1.4 kg of powdered skim milk was dissolved in 5.6 kg of water, and 6.7 kg of a 3 wt% aqueous solution of pectin was added and stirred into a homogeneous mixture, followed by pH adjustment to 3.7 with 2.3 kg of a 10 wt% citric acid solution. After thorough stirring, 6.7 kg of a 3 wt% aqueous solution of soybean dietary fibers was added. Then 2.7 kg of seven-fold concentrate of apple juice, 1.5 kg of 42° carrot juice (pulpy type), and 2 kg of a 1 wt% aspartame solution were added, followed by pH adjustment to 3.8 with 0.5 kg of a sodium citrate solution. A yogurt flavoring agent was added, and the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a beverage product.

The beverage product thus produced contained 0.48 wt% milk protein, 0.2 wt% soybean dietary fibers, and 0.2 wt% pectin, had a pH of 3.8, and was 19 kcal/100 ml, thus being a low-calorie milk-containing acidic beverage.

This beverage product was subjected to the same measurements as in Example 4. The results are shown in Table 2. Further, by visual observation, it was confirmed that the product after the accelerated preservation test had remarkable aggregation and sedimentation, and transparent whey off.

### Comparative Example 7

1.4 kg of powdered skim milk was dissolved in 5.6 kg of water, and 6.7 kg of a 3 wt% aqueous solution of soybean dietary fibers was added and stirred into a homogeneous mixture. Then 6.7 kg of a 3 wt% aqueous solution of pectin was added and stirred into a homogeneous solution, followed by pH adjustment to 3.7 with 2.3 kg of a 10 wt% citric acid solution. 2.7 kg of seven-fold concentrate of apple juice, 1.5 kg of 42° carrot juice (pulpy type), and 2 kg of a 1 wt% aspartame solution were added, followed by pH adjustment to 3.8 with 0.5 kg of a sodium citrate solution. Then a yogurt flavoring agent was added, and the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a beverage product.

The beverage product thus produced contained 0.48 wt% milk protein, 0.2 wt% soybean dietary fibers, and 0.2 wt% pectin, had a pH of 3.8, and was 19 kcal/100 ml, thus being a low-calorie milk-containing acidic beverage.

This beverage product was subjected to the same measurements as in Example 4. The results are shown in Table 2. Further, by visual observation, it was confirmed that the product after the accelerated preservation test had remarkable aggregation and sedimentation, and transparent whey off.

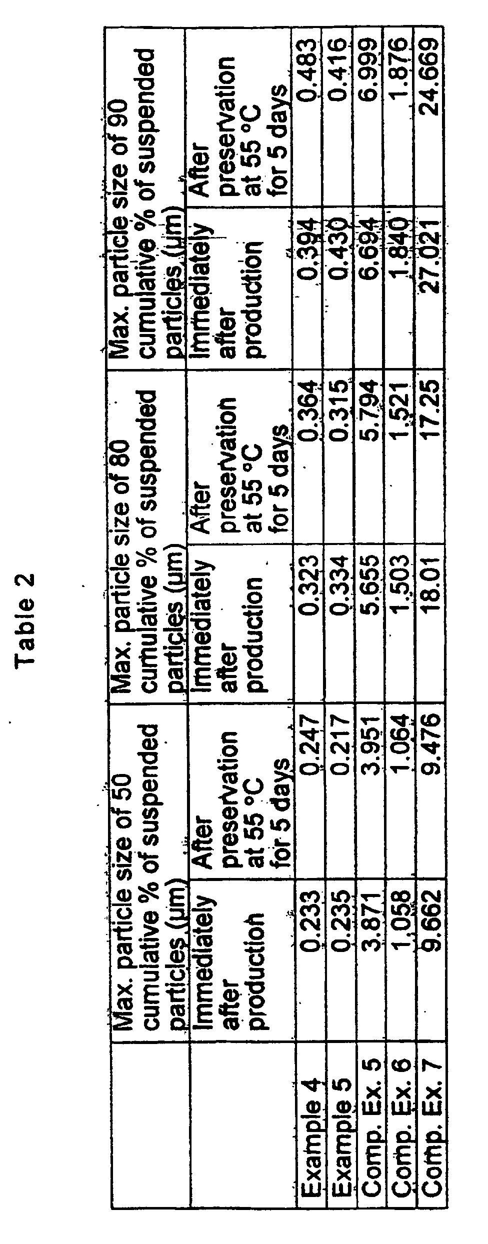

## Claims

1. A low-calorie milk-containing acidic beverage comprising:
milk;
soybean dietary fibers; and
pectin;
wherein said beverage has a pH of 3.0 to 4.0 and is not higher than 20 kcal/100 ml, and
wherein particle sizes of at least 90 % of suspended particles contained in said beverage are less than 0.5 µm.

2. The low-calorie milk-containing acidic beverage of claim 1, wherein a content of said soybean dietary fibers is 0.05 to 1.0 wt%, and a content of said pectin is 0.05 to 1.0 wt%, both of a total weight of said beverage.

3. The low-calorie milk-containing acidic beverage of claim 1, wherein a content of said milk in terms of milk protein is 0.1 to 3.0 wt% of a total weight of said beverage.

4. The low-calorie milk-containing acidic beverage of claim 1 further comprising fruit juice and/or vegetable juice.

5. The low-calorie milk-containing acidic beverage of claim 4, wherein a total content of said fruit juice and/or vegetable juice is 1 to 50 wt% of a total weight of said beverage.

6. The low-calorie milk-containing acidic beverage of claim 1 further comprising an organic acid and/or an inorganic acid.

7. The low-calorie milk-containing acidic beverage of claim 1 further comprising a saccharide and/or a sweetener.

## Patentansprüche

1. Kalorienarmes, Milch enthaltendes, saures Getränk, umfassend:
Milch;
Sojabohnen-Ballaststoffe; und
Pektin;
wobei das Getränk einen pH-Wert von 3,0 bis 4,0 aufweist und nicht mehr als 20 kcal/100 ml hat, und
wobei die Teilchengrößen von mindestens 90 % der suspendierten Teilchen, die in dem Getränk enthalten sind, kleiner als 0,5 µm sind.

2. Kalorienarmes, Milch enthaltendes, saures Getränk nach Anspruch 1, wobei der Gehalt der Sojabohnen-Ballaststoffe 0,05 bis 1,0 Gew.-% und der Gehalt des Pektins 0,05 bis 1,0 Gew.-%, beide bezogen auf das Gesamtgewicht des Getränks, beträgt.

3. Kalorienarmes, Milch enthaltendes, saures Getränk nach Anspruch 1, wobei der Gehalt der Milch, ausgedrückt als Milchprotein, 0,1 bis 3,0 Gew.-%, bezogen auf das Gesamtgewicht des Getränks, beträgt.

4. Kalorienarmes, Milch enthaltendes, saures Getränk nach Anspruch 1, weiterhin umfassend Fruchtsaft und/oder Gemüsesaft.

5. Kalorienarmes, Milch enthaltendes, saures Getränk nach Anspruch 4, wobei der Gesamtgehalt des Fruchtsaftes und/oder Gemüsesaftes 1 bis 50 Gew.-%, bezogen auf das Gesamtgewicht des Getränks, beträgt.

6. Kalorienarmes, Milch enthaltendes, saures Getränk nach Anspruch 1, weiterhin umfassend eine organische Säure und/oder eine anorganische Säure.

7. Kalorienlarmes, Milch enthaltendes, saures Getränk nach Anspruch 1, weiterhin umfassend ein Saccharid und/oder ein Süßungsmittel.

## Revendications

1. Boisson acide hypocalorique contenant du lait comprenant :
du lait ;
des fibres alimentaires de soja; et
de la pectine ;
dans laquelle ladite boisson a un pH de 3,0 à 4,0 et n'a pas plus de 20 kcal/100 ml et
dans laquelle les tailles des particules d'au moins 90 % des particules en suspension contenues dans ladite boisson sont inférieures à 0,5 µm.

2. Boisson acide hypocalorique contenant du lait de la revendication 1, dans laquelle la teneur desdites fibres alimentaires de soja est de 0,05 à 1,0 % en poids et la teneur de ladite pectine est de 0,05 à 1,0 % en poids, toutes deux par rapport au poids total de ladite boisson.

3. Boisson acide hypocalorique contenant du lait de la revendication 1, dans laquelle la teneur dudit lait en termes de protéine de lait est de 0,1 à 3,0 % en poids du poids total de ladite boisson.

4. Boisson acide hypocalorique contenant du lait de la revendication 1 comprenant en plus du jus de fruits et/ou du jus de légumes.

5. Boisson acide hypocalorique contenant du lait de la revendication 4, dans laquelle la teneur totale dudit jus de fruits et/ou dudit jus de légumes est de 1 à 50 % en poids du poids total de ladite boisson.

6. Boisson acide hypocalorique contenant du lait de la revendication 1 comprenant en plus un acide organique et/ou un acide inorganique.

7. Boisson acide hypocalorique contenant du lait de la revendication 1 comprenant en plus un saccharide et/ou un édulcorant.
